Europäisches Patentamt

European Patent Office

Office européen des brevets

(11) Publication number: 0 515 070 A1

# EUROPEAN PATENT APPLICATION

(21) Application number: 92304227.9

(22) Date of filing: 12.05.92

(51) Int. Cl.5: A01N 63/00

(30) Priority: 21.05.91 US 703552

(43) Date of publication of application:
25.11.92 Bulletin 92/48

(84) Designated Contracting States:
AT BE CH DE DK ES FR GB GR IT LI LU MC NL PT SE

(71) Applicant: Mycogen Corporation
5451 Oberlin Drive
San Diego, CA 92121(US)
Applicant: JT BIOTECH USA, INC.
5451 Oberlin Drive
San Diego, California 92121(US)

(72) Inventor: Barnes, Andrew C.
13306 Landfair Road
San Diego, California 92130(US)
Inventor: Evans, Steve L.
11578 Windcrest Lane, No. 1813
San Diego, California 92128(US)
Inventor: Perry, Suzanne
2995 West 34th Avenue
Vancouver, British Columbia, V6N 2J9(US)
Inventor: Kamioka, Osamu
1164-10 Takada-cho, Kohoku-ku
Yokohama, Kanagawa 223(US)

(74) Representative: Perry, Robert Edward
GILL JENNINGS & EVERY 53-64 Chancery Lane
London WC2A 1HN(GB)

(54) Novel process and compositions for delivery of foliar herbicides.

(57) The subject invention pertains to novel methods and compositions utilizing enzymes and chemical herbicides which exhibit enhanced herbicidal activity in controlling unwanted vegetation. The novel compositions and methods described here facilitate effective weed control from sublethal concentrations of chemical herbicides.

EP 0 515 070 A1

## Background of the Invention

Weeds cost farmers billions of dollars annually in crop losses and in the expense of keeping the weeds under control. Much of the cost of intertillage of row crops, maintenance of fallow, seedbed preparation, and seed cleaning is chargeable to weed control. Another expensive item is suppression of weeds along highways and railroad right-of-ways, and in irrigation ditches, navigation channels, yards, parks, grounds, and home gardens. Ragweed pollen is the source of annual periodic distress to several million hayfever sufferers. Poison ivy, poison oak, poison sumac, nettles, thistles, sandburs, and puncturevine also bring pain to millions. Weeds also serve as hosts for other crop diseases as well as for insect pests.

The losses caused by weeds in agricultural production environments include decrease in crop yield, reduced crop quality, increased irrigation costs, increased harvesting costs, decreased land value, injury to livestock, and crop damage from insects and diseases harbored by the weeds.

Chemical herbicides have provided an effective method of weed control in the past. However, the public has become concerned about the amount of chemicals applied to the food that they consume, to the land on which they live, and to the ground water which they use. Stringent restrictions on the use and development of new herbicides and the elimination of some effective herbicides from the market place have limited economical and effective means for controlling costly weed problems.

There is a great need for novel methods of controlling weeds which reduce the amount of chemical herbicide needed to achieve control. One important area of research aimed at reducing the need for chemical herbicides has been the search for biological herbicides. Unfortunately, the highly empirical nature of this research and the many obstacles which must be overcome in order to identify and produce a useful bioherbicide have limited the commercial impact of this form of control.

Researchers have also experimented with unusual chemical approaches to the control of weeds. For example, the enzymatic degradation of plant constituents has been considered as a means of damaging plants. EPO patent application number 85306990.4 (Publication No. 0 184 288) contains a broad assertion that enzymes might be used to control a variety of pests, including insects, fungi, and plants. Also, U.S. Patent No. 4,762,547 describes the use of esterases to enhance biocides.

Enzymes have been used for the enzymatic degradation of plant cell walls, middle lamella and pectin substances in the production of protoplasts for plant tissue culture and the liberation of cuticle from the cell wall (Orgell, W.H. [1985] Plant Physiol. 30:78).

## Brief Summary

The subject invention concerns the unexpected discovery that a mixture of a structural polymer-degrading enzyme and a chemical herbicide produces a herbicidal effect against weeds. This effect significantly enhances the value of the chemical herbicide by reducing the amount of chemical herbicide needed. Exposure of plant tissue to a structural polymer-degrading enzyme disrupts the integrity of the tissue by degrading plant polymers which lie under the outer waxy layers of plants. Damage to these polymers enhances the effectiveness of a chemical herbicide.

Specifically, a combination of at least one structural polymer-degrading enzyme and at least one chemical herbicide results in an enhanced effect as measured by the control of target plants. This enhanced effect is most advantageous when a sub-lethal concentration of a chemical herbicide is used.

In a preferred embodiment of the subject invention the structural polymer-degrading enzymes are enzymes which act on carbohydrate polymers. Thus, these enzymes can include, for example, cellulases, hemicellulases and pectinases. Other structural polymer-degrading enzymes which can be used according to the subject invention include enzymes which degrade polypeptides. Papain is an example of a polypeptide-degrading enzyme. Advantageously, these structural polymer-degrading enzymes may also be used in conjunction with lipid polymer degrading enzymes. These lipid polymer-degrading enzymes may be, for example, lipases, cutinases and esterases.

## Detailed Description

The subject invention concerns the control of weeds through the simultaneous or sequential application of an enzyme with a chemical herbicide. The chemical herbicide may be applied at a sub-lethal rate and the enzyme produces no useful control effect when applied alone.

For purposes of this application, a "weed" is any plant that is objectionable or interferes with the activities or welfare of man. A "herbicide" (or chemical herbicide) is a chemical used to control, suppress, or kill plants, or to severely interrupt their normal growth processes. Herbicide Handbook of the Weed Society of America Fifth Edition (1983), xxi-xxiv. As used herein, the term "bioherbicide" means a biological organism used to control, suppress, or kill plants, or to severely interrupt their normal growth processes.

The invention can be used to control weeds in an agricultural setting and can also be used for nonagricultural applications. For example, the invention can be used for the control of weeds in turf and as a contact bioherbicide for the management of roadside vegetation.

The enzymes which can be used according to the subject invention are referred to herein as "structural polymer-degrading enzymes". As used herein the phrase "structural polymer-degrading enzymes" refers to enzymes which act on non-lipid polymers such as carbohydrate polymers and polypeptides. Thus, examples of structural polymer-degrading enzymes which degrade carbohydrate polymers include, but are not limited to, cellulases such as 1,4-[1,3;1,4]-$\beta$-D-glucan-4-glucanhydrolase (E.C. 3.2.1.4) (Note that "E.C." refers to enzyme classification from International Union of Biochemistry), lysozyme (mucopeptide N-acetyl muramoylhydrolase; E.C. 3.2.1.17), hemicellulase (liberates galactose from hemicellulose), pectinase (poly -[1,4]-$\alpha$-D-galacturonide glycoanohydrolase; E.C. 3.2.1.15), pectryolase (endo-polygalacturonase; E.C. 3.2.1.15),and endo-pectin lyase; E.C. 4.2.2.3), and Novozyme (cellobiase, $\alpha$-glucoside glucohydrolase; E.C. 3.2.1.20). The polypeptide-degrading enzymes which can be used according to the subject invention include, but are not limited to, papain (sulfhydral protease; E.C. 3.4.22.2). The ability of the structural polymer-degrading enzymes to enhance the effectiveness of chemical herbicides is very surprising because the structural polymers were not previously known to be accessible by foliar application. The structural polymers lie in the interior portion of the leaf under the cuticular lipid surface.

A variety of different chemical herbicides can be used alone or in combination according to the subject invention. The specific herbicides which should be used for a given application can be readily ascertained by a person skilled in the art. Following is a list of herbicides which may be used according to the subject invention.

| CHEMICAL HERBICIDE FAMILIES AND EXAMPLES | | |
|---|---|---|
| | HERBICIDE | EXAMPLE |
| 1. | Phenoxy acids (acids, esters, salts) | 2,4-D, MCPA, Dichlorprop |
| 2. | Benzoic acid | Dicamba |
| 3. | Aryloxy phenoxypropionate (acids, esters, salts) | Fluazifop, Dichlofop |
| 4. | Sulfonyl ureas (acids, esters) | Chlorimuron, Bensulfuron |
| 5. | Imidazilinones | Imazethapyr |
| 6. | Bipyridillium | Paraquat |
| 7. | Diphenyl ether (acids, salts) | Acifluorfen, Fomesafen |
| 8. | Cyclohexanedione | Sethdoxydim, Cycloxydim, Clethodim |
| 9. | Methane arsonate | MSMA (Methylarsonic acid) |
| 10. | Triazine | Atrazine, Cyanazine |
| 11. | Aliphatic carboxylic acids | Dalapon |
| 12. | Benzonitrile | Bromoxynil |
| 13. | Carbamate | Barban |
| 14. | Thiocarbamate | Benthiocarb, Triallate |

| OTHER CHEMICAL HERBICIDES | | | |
|---|---|---|---|
| PYRAZON | GLYPHOSATE | PICHLORAM | METRIBUZIN |
| GLUFOSINATE | CLOPYRALID | BENTAZON | |
| DESMEDIPHAM | QUINCLORAC | AMITROLE | PHENMEDIPHAM |
| TRICLOPYR | ETHIOZIN | | |

Herbicides other than those which are specifically listed above may also be used according to the subject invention. In one preferred embodiment of this invention, an enzyme is combined with one or more systemic foliar herbicides. Specifically, the compositions of the subject invention may advantageously comprise a herbicide from one of the following families: phenoxy acids, aryloxy phenoxypropionates, cyclohexanediones, sulfonyl ureas, and imidazilinones. Of these families, imidazilinones and sulfonyl ureas are particularly advantageous. A further preferred embodiment is the use of an enzyme with glyphosate. This combination has shown substantial herbicidal activity as described in the examples below.

Specific examples of the chemical herbicides which can be used together with the fatty acid in the composition of the subject invention include, but are not limited to, glyphosate (N-[phosphonomethyl]-glycine, isopropylamine salt), imazapyr ([±],-2-[4,5-dihydro-4-methyl-4[1-methylethyl]-5-oxo-1H-imidazol-2-yl]-3-pyridine carboxylic acid), sethoxydim (2-[1-[ethoxyimino]butyl]-5-[2-[ethyl-thio]propyl]-3-hydroxy-2-cyclohexen-1-one), acifluorfen (sodium 5-(2-chloro-4-(trifluoromethyl)-phenoxy)-2-nitrobenzoate), bentazon(3-isopropyl-1H-2,1,3-benzothiadiazin-4(3H)-one 2,2-dioxide) or paraquat (1,1'-dimethyl-4,4'-bipyridinium dichloride), used alone or optionally with agricultural adjuvants with which the herbicides are normally admixed. For other chemical herbicides that can be used to practice this invention, see Herbicide Handbook of the Weed Society of America. Fifth Ed. (1983) and H.J. Lorenzini and L.S. Jeffrey, Weeds of the United States and Their Control, NY: Van Nostrand, 1987, Table 1.9.

It should be understood that in practicing this broad approach to weed control, each particular chemical agent and particular enzyme at specific dosages will not necessarily be effective. This is consistent with the behavior of other broad range chemical herbicides, which are rarely, if ever, effective in controlling all types of weeds and are usually ineffective in controlling some weed species. Whether a particular combination of herbicide and enzyme will be useful for a particular application, and the optimal conditions for the particular combination, can readily be determined by those skilled in the art without undue experimentation by simple testing in the greenhouse or the field. Certain principles may guide the selection of parameters. Where the herbicide at a particular dosage already produces a high degree of weed control, additional benefits from the addition of an enzyme may not be apparent. Enhanced control is most apparent when the weed shows partial response to the level of chemical herbicide employed. It will be apparent to those skilled in the art that while the rate of application of the chemical can advantageously be less than the usual field application rate, some level of the chemical will be too low to have a useful effect.

Certain weed species may not be controlled by a particular herbicide because the field application rate is too low. However, actions of the herbicide that are not otherwise manifested may be enhanced by combination with a structural polymer-degrading enzyme sufficient to result in herbicidal activity. Thus, combining a broad range chemical herbicide with an enzyme may serve not only to control the same spectrum of weeds with a lower level of chemical herbicide, but may also permit the control of weed species that are not usually controlled by the chemical herbicide.

Practice of this invention may make it possible to achieve further reductions in the amount of chemical herbicides employed by giving users the option to replace the traditional prophylactic preemergent herbicide application with more efficient postemergent application. A postemergent chemical herbicide used in conjunction with an enzyme could be applied selectively only as required, providing an alternative to heavy preventative preemergent application of herbicides. This approach has not been generally feasible in the past due to the cost and limited spectrum of most postemergent herbicides.

Practice of this invention would have the additional advantage of reducing the costs associated with the disposal of chemical herbicide containers. This reduction would be accomplished by a reduction in the total amount of chemical herbicide used.

The chemical herbicide and enzyme can be applied simultaneously. In other circumstances, it may be preferable to apply the enzyme first, and to apply the chemical later. Alternatively, the chemical agent can be applied first followed by the enzyme. Whether simultaneous or sequential application is optimal will depend on the particular combination of chemical agent and enzyme selected. If the chemical herbicide and enzyme are applied simultaneously, they can be mixed in the same formulation and sprayed on the weeds from the same tank. Compositions for practice of the invention can be formulated in numerous ways, including flowables, dry flowables, water dispersible granules or emulsified concentrates. The invention can also be practiced by applying a mixture of different chemical agents in conjunction with the enzyme(s). The formulations of the invention may also contain adjuvants such as surfactants and suspension agents.

The advantageous combination of chemical and enzymatic activities to achieve herbicidal activity can be used in conjunction with other herbicidal techniques. For example, the procedures of the subject invention may be used with non-traditional chemical herbicides including plant hormone mimics, plant growth regulators, and photosynthesis inhibitors. The methods of the subject invention can also be used in conjunction with biological herbicides, including phytopathic fungi and bacteria, as well as to enhance the effectiveness of fatty acid herbicides and their derivatives.

Following are examples which illustrate procedures, including the best mode, for practicing the invention. These examples should not be construed as limiting. All percentages are by weight and all solvent mixture proportions are by volume unless otherwise noted.

Example 1:

Greenhouse trials were carried out to demonstrate the enhanced herbicidal activity obtained following application of a polymer-degrading enzyme and a chemical herbicide. Barnyardgrass was planted in 2 x 2-inch pots in a soil-less potting mix (PROMIX) and was cultivated in greenhouses that were maintained at daytime temperatures of 70-90°F, and was watered by sub-irrigation to maintain vigor. Plants were treated at the 2-3 true leaf stage.

The enzymes were prepared by carefully weighing 30 mg and suspending that amount in 30 ml of distilled water (1 mg/ml enzyme solution). 700 $\mu$l of the commercial adjuvant DASH (BASF Corporation) was diluted into 29.3 ml water and was used as a positive chemical adjuvant control to illustrate a representative amount of herbicidal activity enhancement that is possible under the test conditions. The herbicide glyphosate was prepared by diluting the requisite amount of commercial RODEO 41 (Monsanto Corporation, St. Louis, MO) with sufficient water to provide spray mixes which, when applied at an application rate of 100 gpa by a track sprayer, would deliver to the plants the field equivalent of 0.25, 0.125, 0.063, 0.031% a.i. w/v of the active isopropylamine salt of glyphosate in water.

Barnyardgrass was sprayed with water only (no adjuvant control), DASH (positive control), or the enzyme solutions (test adjuvants) at a rate of 200 gallons per acre (gpa) using a handheld herbicide spray gun (Meterjet, Spraying System Company), then the plants were treated with the herbicide in a track sprayer as described above. Following these applications the plants were removed to the greenhouse and maintained under good growing conditions for the duration of the test period.

Herbicidal effects were assessed 14 days after treatment (DAT). The weed control ratings ascertained the extent of control, i.e., reduction in growth, obtained and scored on the basis of 0 to 100 where 100 represents complete killing of the plants and 0 represent no reduction in growth, as compared to the untreated check. Table 1 shows the effects of several polymer-degrading enzymes on ultimate herbicidal effect.

Table 1

| Percent Control of Barnyardgrass 14 DAT | | |
|---|---|---|
| Adjuvant | Herbicide Rate (%) | |
| | 0.125 | 0.250 |
| None[a] | 40 | 70 |
| DASH[b] | 95 | 99 |
| Pectinase 1[c] | 70 | 90 |
| Cellulase 1[d] | 70 | 99 |
| Novozyme[e] | 50 | 95 |
| Lysozyme[f] | 60 | 80 |
| Papain[g] | 70 | 99 |

[a]Treated with water only
[b]Product of BASF Corporation
[c]from A. niger
[d]from A. niger
[e]from A. niger
[f]from egg white
[g]from papaya latex

Example 2:

A greenhouse trial using sicklepod was conducted to determine if these polymer-degrading enzymes would enhance herbicidal activity on other plants. Sicklepod was planted and grown as described above. One plant was contained in each 2 x 2-inch pot, and the plants were grown to the 1 true leaf stage.

All solutions were prepared and applied as described above, and the treatments were rated for herbicidal effects 14 DAT. Tables 2 and 3 show the effect of several polymer-degrading enzymes on

herbicidal activity.

TABLE 2: Percent Control of Sicklepod 14DAT

| Adjuvant | Herbicide Rate (%) | |
| --- | --- | --- |
| | 0.063 | 0.125 |
| None[a] | 30 | 40 |
| DASH[b] | 50 | 70 |
| Lipase 1[c] | 50 | 85 |
| Lipase 2[d] | 60 | 100 |
| Cellulase 1[e] | 60 | 97 |
| Cellulase 2[f] | 50 | 90 |
| Cellulase 3[g] | 50 | 85 |
| Hemicellulase[h] | 50 | 95 |
| Pectinase[i] | 50 | 80 |
| Pectryolase[j] | 60 | 98 |

[a]Treated with water only.

[b]Product of BASF Corporation

[c]Porcine pancreatic lipase

[d]From Pseudomonas spp.

[e]From Trichoderma virde

[f]From Aspergillis niger

[g]From Penicillium spp.

[h]From Aspergillis niger

[i]From Rhizopus spp.

[j]Product of Seishin Pharmaceutical, Tokyo, Japan

6

Table 3

| Percent Control of Sicklepod 14 DAT | | |
|---|---|---|
| Adjuvant | Herbicide Rate (%) | |
| | 0.125 | 0.250 |
| None[a] | 40 | 60 |
| DASF[b] | 70 | 99 |
| Pectinase 1[c] | 40 | 100 |
| Pectinase 2[d] | 70 | 90 |
| Cellulase 1[c] | 70 | 95 |
| Novozyme[f] | 90 | 70 |
| Lysozyme[g] | 60 | 70 |
| Papain[h] | 50 | 80 |

[a]Treated with water only
[b]Product of BASF Corporation
[c]from A. niger
[d]from A. niger
[e]from A. niger
[f]from A. niger
[g]from egg white
[h]from papaya latex

## Claims

1. A composition, for controlling unwanted vegetation, comprising a structural polymer-degrading enzyme, a chemical herbicide, and a suitable agricultural carrier.

2. A composition according to claim 1, wherein the enzyme is selected from cellulases, hemicellulases and pectinases.

3. A composition according to claim 1 or claim 2, wherein the herbicide is a foliar herbicide.

4. A composition according to any preceding claim, wherein the herbicide is selected from phenoxy acids and their esters and salts; benzoic acid, aryloxy phenoxypropionate acids and their esters and salts; sulfonylurea acids and their esters; imidazilinones; bipyridillium; diphenyl ether acids and their salts; cyclohexanedione; methane arsonate; triazine; aliphatic carboxylic acids; benzonitrile; carbamate; thiocarbamate; pyrazon; glyphosate; pichloram; metribuzin; glufosinate; clopyralid; bentazon; desmedipham; quinclorac; amitrole; phenmedipham; triclopyr; and ethiozin.

5. A composition according to claim 4, wherein the herbicide is a phenoxy acid, aryloxy phenoxypropionate, cyclohexanedione, sulfonylurea or imidazilinone.

6. A composition according to claim 4, wherein the herbicide is sethoxydim, paraquat or, preferably, glyphosate or imazethapyr.

7. A composition according to any preceding claim, which further comprises a lipid-polymer-degrading enzyme.

8. A composition according to claim 7, wherein the lipid-polymer-degrading enzyme is selected from lipases, cutinases and esterases.

9.  A process for controlling unwanted vegetation, which comprises applying thereto a composition according to any preceding claim.

10. A process for controlling unwanted vegetation, which comprises the sequential application thereto of a polymer-degrading enzyme, a chemical herbicide and, optionally, a lipid-polymer-degrading enzyme, these components preferably being as defined in any of claims 2 to 6 and 8.

| | DOCUMENTS CONSIDERED TO BE RELEVANT | | EP 92304227.9 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | EP - A - 0 272 002 (GENENCOR INC.) * Totality; esp. claims * -- | 1-4, 7-10 | A 01 N 63/00 |
| D,X | US - A - 4 762 547 (IWASAKI et al.) * Totality; esp. claims * -- | 1-10 | |
| D,A | EP - A - 0 184 288 (FBC LIMITED) * Claims * ---- | 1,2, 7-10 | |

TECHNICAL FIELDS SEARCHED (Int. Cl.5)

A 01 N

The present search report has been drawn up for all claims

| Place of search | Date of completion of the search | Examiner |
|---|---|---|
| VIENNA | 21-08-1992 | SCHNASS |